# NEW EUROPEAN PATENT SPECIFICATION

(11) **EP 1 633 202 B2**
(45) Date of publication and mention of the opposition decision: **17.10.2012**
(45) Mention of the grant of the patent: 26.11.2008
(21) Application number: 04754160.2
(22) Date of filing: 03.06.2004
(51) Int. Cl.: A23K 1/18, A23K 1/16

(54) **HIGH PROTEIN, LOW CARBOHYDRATE CAT FOOD COMPOSITION COMPRISING NON-FERMENTABLE FIBRE**
KATZENFUTTER MIT EINEM HOHEN GEHALT AN EIWEISS, EINEM NIEDRIGEN GEHALT AN KOHLENHYDRATE, FERNER ENTHALTEND NICHT-FERMENTIERBARE FASERN
COMPOSITION ALIMENTAIRE POUR CHATS DOMESTIQUES RICHE EN PROTÉINES ET PAUVRE EN GLUCIDES, CONTENANT UNE FIBRE NON-FERMENTESCIBLE

(30) Priority: 03.06.2003 US 475424 P
(43) Date of publication of application: 15.03.2006
(73) Proprietor: Hill's Pet Nutrition, Inc., Topeka, KS 66603 (US)
(72) Inventor: SCHOENHERR, William, David, Hoyt, KS 66440 (US); KIRK, C. A., C247 Veterinary Teaching Hospital,, Knoxville, TN 37996-4544 (US); FRIESEN, Kim, Gene, Topeka, KS 66614 (US); CLARK, Harry, Mead, III, Topeka, KS 66610 (US); COWLEY, Craig, Richard, Meriden, KS 66512 (US)
(74) Representative: Daniels, Jeffrey Nicholas
(86) International application number: PCT/US2004/017492
(87) International publication number: WO 2004/107878

(56) References cited:
- WO-A-02/056702
- WO-A-03/061706
- US-A1- 2001 018 067
- US-B1- 6 203 825
- US-B1- 6 410 063
- DIEZ M ET AL: "WEIGHT LOSS IN OBESE DOGS: EVALUATION OF A HIGH-PROTEIN, LOW-CARBOHYDRATE DIET" June 2002 (2002-06), JOURNAL OF NUTRITION, WISTAR INSTITUTE OF ANATOMY AND BIOLOGY, PHILADELPHIA, PA,, US, PAGE(S) 1685S-1687S , XP008013139 ISSN: 0022-3166 the whole document
- BURKHOLDER W J ET AL: "TIMELY TOPICS IN NUTRITION. FOODS AND TECHNIQUES FOR MANAGING OBESITY IN COMPANION ANIMALS" JOURNAL OF THE AMERICAN VETERINARY MEDICAL ASSOCIATION, XX, XX, vol. 212, no. 5, 1988, pages 658-662, XP000866318 ISSN: 0003-1488
- 'Total,Soluble, and Insoluble Dietary Fiber in Foods' AOAC INTERNATIONAL 2005,
- JOHN M DEMAN: 'Principles of Food Chemistry', 1999 pages 203 - 208
- W.J.BURKHOLDER AND J.E. BAUER: 'Timely Topics in Nutrition- Foods and Techniques for Managing Obesity in Companion Animals' JAVMA vol. 212, no. 5, 01 March 1998, pages 658 - 662, XP866318
- HAND ET AL.: 'Obesity: Occurrence,Treatment and Prevention' VETERINARY CLINICS OF NORTH AMERICA: SMALL ANIMAL PRACTICE vol. 19, no. 3, 1989, pages 447 - 474
- 'Purina Veterinary Diets - Veterinary Product Guide for Diabetes Management Feline Formula' January 2001,
- 'Nutro Natural Choice Complete Care Weight Loss Management Cat Food' MINTEL GNPD April 2003, Retrieved from the Internet: <URL:www.gnpd.com>
- 'Lams(Pet Food) Adult Premium Cat Food Reformation' MINTEL GNPD March 2003,
- 'Ralston Purina One Indoor Pet Food' MINTEL GNDP February 2002,
- 'Ralston Purina Pro Plan Indoor Cat Food' MINTEL GNPD January 2002,
- 'Nutro Products Complete Care Weight Management Cat Food' MINTEL GNPD October 2001,
- 'Lams Pet Food New Cat Food Formulation' MINTEL GNPD September 2001,
- 'Effem Advance Adult Cat Food' MINTEL GNPD November 2000,
- GHANEM ET AL.: 'Microbial extraction of beet pulp pectin' RESOURCES,CONSERVATION AND RECYCLING vol. 6, 1991, pages 35 - 44
- DINAND ET AL: 'Suspensions of cellulose microfibrils from sugar beet pulp' FOOD HYDROCOLLOIDS vol. 13, 1999, pages 275 - 283
- SUNVOLD E. ET AL: 'In vitro fermentation of cellulose, beet pulp,citrus pulp, and citrus pectin using fecal inocolum from cats, dogs, horses, humnas, and pigs and ruminal fluid from cattle' JOURNAL OF ANIMAL SCIENCE vol. 73, 1995, pages 3639 - 3648

## Description

### FIELD OF THE INVENTION

The invention provides food compositions containing high protein, high fat, and low carbohydrate levels which also contain non-fermentable fiber, and methods of using same.

### BACKGROUND OF THE INVENTION

Weight management is an issue for companion animals. Approximately 25% of cats and dogs are overweight and/or obese. The term overweight includes those animals that are above normal body weight up through and including obesity. A number of approaches have been used in an attempt to control feline or canine body weight, particularly in those cats or dogs which have a tendency to become overweight or those cats or dogs which are already overweight. Food with overall reduced calories, reduced fat content, or reduced carbohydrates have all been employed.

Many commercial pet foods are enhanced with fiber in order to produce satiety and reduce food intake. A less traditional approach to weight management utilizes high protein and low carbohydrate.

WO-02/056702 discloses a dog food for controlling obesity in dogs, comprising at least 35 wt.% of protein, furthermore rapidly and slowly digestible carbohydrates and/or fats. Preferably at least 10 wt-% of crude fibre and less than 10 wt.% of starch are present. A composition called "Select Care Canine Highfactor Formula" comprising 10.8 wt.% of fat, 14.7 wt.% of crude fibre, 25.7 wt.% of protein is disclosed.

US-B-6,410,063 discloses a method for inducing a state of ketosis in a canine, to regulate body weight (gain, loss, maintenance), which comprises feeding a diet comprising 0-20 wt.%, preferably 0-10 wt.% of carbohydrate, 25-70 wt.%, preferably 25-40 wt.% of protein, 20-70 wt,%, preferably 30-60 wt.% of fat. It is disclosed that 3-3,5 wt.% of crude fibre is added for stool consistency.

US-B-6,203,825 discloses a method of protecting an obligate carnivore from a disease of abnormal carbohydrate metabolism (*e*.*g*. obesity), by feeding diet that includes a low carbohydrate content (less than 12 wt.%), a high protein content (30-70 wt.%), and a moderate fat content (10-40 wt.%) and some filler, *e*.*g*. crude fibre. It is described that obligate carnivores, such as cats, normally have very low intake of carbohydrates, and their carbon sources are mainly protein and fat. Therefore, when cats are fed a low protein diet, a high nitrogen loss occurs. A diet comprising 1% crude fibre is disclosed.

Diez et al. disclose in Journal of Nutrition (2002-06), pages 1685S-1687S weight loss in obese dogs by implementation of a high protein (47.5 wt.%), low carbohydrate diet (5.3 wt.% of starch) comprising 30.8 wt.% total dietary fibre. It is disclosed that feeding of a high-protein diet in obese dogs resulted in a better conservation of lean body mass.

It would be a significant contribution to the art to provide a nutritionally balanced food composition that is high in protein, high in fat, and low in carbohydrate, and which also contains non-fermentable fiber that is useful in managing weight in cats that are overweight or that may have a tendency to become overweight.

### SUMMARY OF THE INVENTION.

The present invention provides a food composition for a cat having high protein, high fat, low carbohydrate, and non-fermentable fiber.

The present invention further provides a method for feeding a cat the above composition wherein said cat is in need of weight management.

### DETAILED DESCRIPTION OF THE INVENTION

Weight management in companion animals, as well as human, has been an increasingly significant problem in recent years. It is now estimated that approximately 25% of pet dogs and cats in the U.S. are overweight and/of obese. Various methods and products for managing weight in mammals have been previously employed.

High protein, low carbohydrate foods are known in the art, and are frequently referred to as "ketogenic" foods. A specific example of the use of a ketogenic food would be the popular "Atkins Diet", which uses foods high in protein, high in fat, and low in carbohydrate content.

The present invention provides a food composition having high protein levels, high fat levels, low carbohydrate levels, and non-fermentable fiber that is useful in managing weight in cats. The addition of non-fermentable fiber to a feline food having high protein, high fat, and low carbohydrate can increase the rate of weight change, and/or can provide less lean tissue loss, and/or can increase the rate of fat loss compared to the low carbohydrate food without added non-formentable fiber.

Particularly, the invention relates to a food composition for use in a cat comprising from 25 to 70 wt % protein, from 10 to 60 wt% fat, 0-15 wt. % carbohydrate, and 9 to 15 wt % non-fermentable fiber selected from cellulose, hemicellulose, lignin and mixtures thereof, wherein the term "wt.%" refers to wt.% calculated on a dry matter base.

Moreover, the invention relates to the use of a composition of the invention in the manufacture of a food composition for managing weight in a cat.

The term "wt %" as employed throughout the specification and claims refers to wt % calculated on a dry matter basis.

The above compositions and methods are particularly useful wherein the overweight condition of the cat is not due to a disease state resulting from carbohydrate metabolism, such as wherein the cat has diabetes.

The addition of non-fermentable fibers to a high protein, high fat, low carbohydrate food has been found to be advantageous for managing weight in cats. The non-fermentable fiber of the present composition can provide enhanced weight loss, for example, as expressed above, in addition to enhanced satiety.

The protein may be from any source. A protein source having low carbohydrates is particularly preferred. Examples of such protein sources include animal sources such as meat protein isolate, whey protein isolate, and mixtures thereof, as well as vegetable sources, such as soy protein isolate, corn gluten meal, wheat gluten, and mixtures thereof.

The fat may be from any source. Examples of such fat sources include poultry fat, beef tallow, lard, choice white grease, soybean oil, corn oil, canola oil, sunflower oil, and mixtures thereof. The fat may be incorporated completely within the food composition, deposited on the outside of the food composition, or a mixture of the two methods.

The carbohydrate may be from any source, and may enter the food composition as part of another ingredient, such as the protein source. Examples of such carbohydrate sources include starches and grains, such as corn, wheat, sorghum, barley, rice, and mixtures thereof.

The term non-fermentable fiber is defined as a fiber having an organic matter disappearance rate of less than 15%, preferably less than 8 to 12%, when fermented by non-ruminant fecal bacteria *in vitro* for a 24 hour period. An alternative definition of non-fermentable fiber is any fiber source which may be fermented by intestinal bacteria present in the animal to produce less than 0.5 mmol of short chain fatty acids per gram of substrate in a 24 hour period. The non-fermentable fiber is selected from cellulose, hemicellulose, lignin, and mixtures thereof. Examples of fermentable fibers include pectins, gums, and mucilages. The fiber, both fermentable and non-fermentable, are measured by AOAC Official Method 991.43.

Protein concentrations provided in the present food composition are from 25 to 70 wt %. Suitable representative minimum protein concentrations include 25, 40, 45, and 47 wt %. Suitable representative maximum protein concentrations include 60 and 70 wt %. Preferred for the present invention are protein concentrations of from 40 to 70 wt %. Additionally preferred for the practice of the present invention are protein concentrations of from 45 to 60 wt %. Particularly preferred for the practice of the present invention are protein concentrations of from 47 to 60 wt %. Fat concentrations provided in the present food composition are from 10 to 50 wt %. Suitable representative minimum fat concentrations include 10 and 20 wt %. Preferred for the present invention are fat concentrations of from 20 to 60 wt %. Carbohydrate concentrations provided in the present food composition are based, on Nitrogen Free Extract (NFE) determinations and are from 0 to 15 wt %. Suitable representative minimum carbohydrate concentrations include 0,5, and 10 wt %. A suitable representative maximum carbohydrate concentration includes 12 wt %. Preferred for the present invention are carbohydrates concentrations of from 12 to 15 wt %. Suitable representative maximum non-fermentable fiber concentrations include 10 and 12 wt %.

When the term "food" is used, this may refer not only to a food product which typically provides most, if not all, the nutrient value for a cat, but may also refer to such items as a snack, treat, and supplement.

The food composition may be provided to any cats, is in need of weight management. The cat may be one which is currently overweight or one which has a tendency to become overweight, and preferably where the weight issue does not arise from a disease of abnormal carbohydrate metabolism, such as, for example, diabetes. The need for weight management in the cat may arise due to the cat expending fewer calories than those being ingested. For example, this may result from overeating, insufficient activity, a combination of the two, or for other unknown reasons. Temporary abnormal carbohydrate metabolism is not a disease and may result from tramma to the cat, such as illness, injury, or surgery. Temporary abnormal carbohydrate metabolism may also result from feeding a cat an improper diet, such as, for example, feeding a diet that is high in carbohydrates. Cats differ from dogs in their ability to process carbohydrates and fats based on different enzyme functionality, such as liver and pancreatic enzymes. High intake of carbohydrates by an animal adapted to an almost exclusive intake of fat and protein may result in an abnormal regulation of hormones and enzymes that signal the fed and unfed state to the body. This may result in temporary abnormal carbohydrate metabolism, wherein the normal carbohydrate metabolic state returns to the animal once the carbohydrate levels in the food have been altered.

Obesity, by definition, is the accumulation of an excessive quantity of fat. Body weight increases as fat accumulates; thus, having excessive body fat and being overweight are related. Obesity develops when animals are in a positive energy balance for an extended period of time. This occurs when energy intake increases, energy expenditure decreases, or both occur.

Body weight relative to a cat's optimal weight has been used as a defining criterion for obesity because body weight is easier to measure than body fat. Overweight cats are subdivided into three categories:
1) those amimals 1 to 9% above optimal weight that are simply above optimal weight,
2) those animals 10 to 19% above optimal weight that are considered overweight; and
3) those animals 20% above optimal weight that are considered obese. Categories 2) and 3) above are those categories addressed by the present invention for reducing weight in overweight and/or obese animals.

Physical activity significantly influences the energy requirements of individual cats. Cats that are prone to become obese typically have lower levels of physical activity than those that are not prone to become obese.

The effect provided by the present composition including the non-fermentable fibers has been observed in the cat as an increase in the rate of weight change and/or a decrease in lean tissue loss and/or an increased rate of fat loss. These observations may be made in animals which are already overweight, where the feeding of the food composition is intended to alleviate or reduce this issue. With respect to cats having a tendency to be overweight or obese, these or similar observations related to the kinetics and/or specificity of weight control may be made.

### EXAMPLE

The effect on cats of a food having increased amounts of non-fermentable fiber was assessed in the following experiment.

### EXAMPLE 1

### CAT STUDY

**Experimental Design:** On day 0 obese cats were weighted, anesthetized, and body composition was determined via Dual Energy X-Ray Absorptiometry (DEXA). Animals were allotted to treatments based on body composition, weight, and gender. Beginning on day 1, each cat received a randomly assigned food and the animals remained on their respective weight loss dietary treatment for the duration of the study. The canned foods used in this study were in one of two forms, a conventional loaf or minced food preparation.

For the weight loss period, each cat received its daily food amount based on energy requirements of its ideal body weight (20% body fat). The formula used to determine the amount of calories offered to each animal was as follows: kcal offered per day = .8 x (70 x ideal body weight (kg)⁷⁵). The amount of food offered daily to each animal was calculated by dividing the amount of calories to be offered by the caloric density of the food (kcal/kg). Use of this equation allowed animals to lose body weight at a rate of 1.0 to 1.5% of their initial body weight per week. Initial body composition was determined by DEXA. Ideal body weight was estimated by calculating fat-free body mass from the DEXA analysis and adding 20% fat to this total.

The end of the study was determined for each animal by its meeting a body fat percentage of 20% or at the completion of 24 weeks on study. All cats were weighed weekly and DEXA'd every 4 weeks to measure their individual progress in weight loss.

**TABLE 1**

| Description | | **Feline** | **Feline** | **Feline** |
|---|---|---|---|---|
| | | **Low CHO Added** | **Low CHO Added** | **Low CHO Added** |
| | | **Non-fermentable** | **Non-fermentable** | **No Non-fermentable** |
| | | **Fiber** | **Fiber** | **Fiber** |
| | | **Canned - Loaf** | **Canned - Minced** | **Canned - Minced** |
| Nutrient Analysis | | | | |
| (100% DM Basis) | | | | |
| Protein, % | | 61.34 | 56.06 | 59.93 |
| Fat, % | | 14.14 | 20.56 | 27.38 |
| Total Dietary Fiber, % | | 11.25 | 11.02 | 1.96 |
| | Fermentable Fiber, % | .18 | 1.97 | 1.86 |
| | Non-fermentable Fiber,% | 11.07 | 9.05 | 0.10 |
| Ash, % | | 4.98 | 5.68 | 5.78 |
| NFE, % Calculated | | 10.51 | 10.07 | 6.44 |
| ME, Kcal/kg Calculated | | 3717 | 4075 | 4531 |
| | | | | |

| **Ingredient** | | | | |
|---|---|---|---|---|
| Water, % | | 16.13 | 25.07 | 33.63 |
| Meat By-Products,% | | 60.00 | 68.13 | 58.50 |
| Starch, % | | 2.00 | 1.61 | 1.05 |
| Meat or Soy Isolate, % | | 7.99 | 1.00 | 2.50 |
| Cellulose | | 4.00 | 2.23 | --- |
| Corn Gluten Meal, % | | 4.50 | --- | --- |
| Animal Fat, % | | 1.84 | 0.45 | 2.68 |
| Pal Enhancer, % | | 1.20 | --- | --- |
| Gravy System, % | | --- | 0.53 | 0.63 |
| Minerals, % | | 2.15 | 0.79 | 0.81 |
| Vitamins, % | | 0.19 | 0.19 | 0.20 |
| Total, % | | **100.00** | **100.00** | **100.00** |

**TABLE 2**

| EFFECT OF FIBER ON WEIGHT LOSS IN OBESE CATS FED HIGH PROTEIN, | | | | |
|---|---|---|---|---|
| LOW CARBOHYDRATE FOODS | | | | |
| Formula Description | Non-fermentable | Rate of Weight | Rate of Fat | Rate of Lean |
| | Dietary Fiber, % | Change, | Tissue Change, | Tissue Change, |
| | | g/d | g/d | g/d |
| Low CHO w/o | .10 | -10.0 | -8.5 | -1.4 |
| Fiber, Minced | | | | |
| Low CHO w/Fiber | 11.07 | -11.2 | -10.1 | -0.5 |
| Loaf | | | | |
| Low CHO w/ Fiber, | 9.05 | -10.3 | -9.5 | -0.7 |
| Minced | | | | |

The food was provided for a span of about 112 to about 168 days.

**Results:** The combined weight loss data showed that cats fed high protein, low carbohydrate foods had effective weight loss. The rate of weight change was further increased when fiber was added to the foods. Thus, a low carbohydrate food without added non-fermentable fiber gave effective weight loss, however, the addition of the non-fermentable fiber further increased the rate of weight change. The addition of fiber to a low carbohydrate food also resulted in less lean tissue loss and an increase in the rate of fat loss compared to low carbohydrate foods without fiber.

## Claims

1. A food composition suitable for a cat comprising from 25 to 70 wt % protein, from 10 to 60 wt % fat, 0 to 15 wt % carbohydrate, and 8 to 15 wt % non-fermentable fiber selected from cellulose, hemicellulose, lignin and mixtures thereof, wherein the term "wt %" refers to wt % calculated on a dry matter base.

2. The composition of Claim 1 wherein said cat is in need of weight management, and particularly is overweight; or is obese; or is a cat with a tendency to gain weight; or is a cat with temporary abnormal carbohydrate metabolism.

3. The composition of claim 1 or claim 2 wherein said protein concentration is from 40 wt % to 70 wt %, preferably from 45 wt % to 70 wt%, more preferably from 45 wt% to 60 wt %, still more preferably from 47 wt.% to 60 wt.%, most preferably 51-53 wt %.

4. The composition of any one of the preceding claims wherein said fat concentration is from 20 wt % to 60 wt %, preferably 21 to 23 wt%.

5. The composition of any one of the preceding claims wherein said carbohydrate concentration is from 12 wt % to 15 wt %.

6. The composition of any one of the preceding claims wherein said fiber concentration is from 8 to 10 wt %.

7. Use of a composition of any one of claims 1-6 in the manufacture of a food composition for managing weight in a cat.

8. The use of claim 7, wherein said cat in need of weight management is overweight; or is obese; or is a cat with a tendency to gain weight; or is a cat with temporary abnormal carbohydrate metabolism.

## Patentansprüche

1. Nahrungsmittelzusammensetzung, die für eine Katze geeignet ist, die 25 bis 70 Gew.% Protein, 10 bis 60 Gew.% Fett, 0 bis 15 Gew.% Kohlenhydrat und 8 bis 15 Gew.% nicht fermentierbaren Ballaststoff ausgewählt aus Cellulose, Hemicellulose, Lignin und Mischungen davon umfasst, wobei sich der Begriff "Gew.%" auf Gew.%, berechnet auf Basis von Trockenmasse, bezieht.

2. Zusammensetzung nach Anspruch 1, wobei die Katze einer Gewichtssteuerung bedarf und insbesondere übergewichtig ist oder fettleibig ist, oder eine Katze mit einer Tendenz zur Gewichtszunahme ist, oder eine Katze mit temporär abnormalem Kohlenhydratmetabolismus ist.

3. Zusammensetzung nach Anspruch 1 oder Anspruch 2, wobei die Proteinkonzentration 40 Gew.% bis 70 Gew.% beträgt, vorzugsweise 45 Gew.% bis 70 Gew.%, bevorzugter 45 Gew.% bis 60 Gew.%, insbesondere 47 Gew.% bis 60 Gew.%, besonders bevorzugt 51 bis 53 Gew.%.

4. Zusammensetzung nach einem der vorhergehenden Ansprüche, wobei die Fettkonzentration 20 Gew.% bis 60 Gew.% beträgt, bevorzugt 21 bis 23 Gew.%.

5. Zusammensetzung nach einem der vorhergehenden Ansprüche, wobei die Kohlenhydratkonzentration 12 Gew.% bis 15 Gew.% beträgt.

6. Zusammensetzung nach einem der vorhergehenden Ansprüche, wobei die Ballaststoffkonzentration 8 bis 10 Gew.% beträgt.

7. Verwendung einer Zusammensetzung gemäß einem der Ansprüche 1 bis 6 bei der Herstellung einer Nahrungsmittelzusammensetzung zur Steuerung des Gewichts einer Katze.

8. Verwendung nach Anspruch 7, wobei die Katze, die einer Gewichtssteuerung bedarf, übergewichtig ist oder fettleibig ist oder eine Katze mit einer Tendenz zur Gewichtszunahme ist oder eine Katze mit temporär abnormem Kohlenhydratmetabolismus ist.

## Revendications

1. Composition alimentaire appropriée pour un chat comprenant de 25 % à 70 % en poids de protéines, de 10 % à 60 % en poids de matières grasses, de 0 % à 15 % en poids de glucides, et de 8 % à 15 % en poids de fibres non-fermentescibles choisies parmi la cellulose, l'hémicellulose, la lignine et leurs mélanges, où le terme « % en poids » fait référence au % en poids calculé sur une base de matière sèche.

2. Composition selon la revendication 1, dans laquelle ledit chat a besoin d'une gestion du poids, et en particulier est en surpoids ; ou est obèse ; ou est un chat avec une tendance à prendre du poids ; ou est un chat avec un métabolisme glucidique temporairement anormal.

3. Composition selon la revendication 1 ou 2, dans laquelle ladite concentration en protéines est de 40 % à 70 % en poids, de préférence de 45 % à 70 % en poids, de manière plus préférée de 45 % à 60 % en poids, de manière encore plus préférée de 47 % à 60 % en poids, de manière la plus préférée de 51 % à 53 % en poids.

4. Composition selon l'une quelconque des revendications précédentes, dans laquelle ladite concentration en matières grasses est de 20 % à 60 % en poids, de préférence de 21 % à 23 % en poids.

5. Composition selon l'une quelconque des revendications précédentes, dans laquelle ladite concentration en glucides est de 12 % à 15 % en poids.

6. Composition selon l'une quelconque des revendications précédentes, dans laquelle ladite concentration en fibres est de 8 % à 10 % en poids.

7. Utilisation d'une composition selon l'une quelconque des revendications 1 à 6, dans la fabrication d'une composition alimentaire pour la gestion du poids d'un chat.

8. Utilisation selon la revendication 7, dans laquelle ledit chat ayant besoin d'une gestion du poids est en surpoids ; ou est obèse ; ou est un chat avec une tendance à prendre du poids ; ou est un chat avec un métabolisme glucidique temporairement anormal.
